(19) Europäisches Patentamt
European Patent Office
Office européen des brevets

(11) EP 1 636 050 B1

(12) # EUROPEAN PATENT SPECIFICATION

(45) Date of publication and mention of the grant of the patent:
**28.10.2009 Bulletin 2009/44**

(21) Application number: **03740317.7**

(22) Date of filing: **24.06.2003**

(51) Int Cl.:
***B60C 1/00*** *(2006.01)* ***B60C 11/18*** *(2006.01)*
***C08K 9/04*** *(2006.01)* ***C08K 3/34*** *(2006.01)*

(86) International application number:
**PCT/EP2003/006620**

(87) International publication number:
**WO 2005/002883 (13.01.2005 Gazette 2005/02)**

(54) **TYRE FOR VEHICLE WHEELS WITH TREAD BAND OF CAP AND BASE CONSTRUCTION**

FAHRZEUGREIFEN MIT CAP/BASE-LAUFSTREIFEN

PNEU POUR ROUES DE VEHICULE DOTE D'UNE BANDE DE ROULEMENT A CHAPE ET D'UNE STRUCTURE DE BASE

(84) Designated Contracting States:
**AT BE BG CH CY CZ DE DK EE ES FI FR GB GR HU IE IT LI LU MC NL PT RO SE SI SK TR**

(43) Date of publication of application:
**22.03.2006 Bulletin 2006/12**

(73) Proprietor: **Pirelli Tyre S.p.A.**
**20126 Milano (IT)**

(72) Inventors:
- **GALIMBERTI, Maurizio**
  **I-20133 Milano (IT)**
- **FINO, Luigi**
  **I-20030 Bovisio Masciago (IT)**
- **VERONA, Marco**
  **I-20092 Cinisello Balsamo (IT)**

(74) Representative: **Giannesi, Pier Giovanni**
**Pirelli Pneumatici S.p.A.**
**Viale Sarca 222**
**20126 Milano (IT)**

(56) References cited:
**EP-A- 1 211 283** **EP-A- 1 273 616**
**GB-A- 2 370 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 636 050 B1

## Description

The present invention relates to a tyre for vehicle wheels with tread band of cap and base construction.

More particularly, the present invention relates to a tyre for vehicle wheels with a tread band comprising a radially outer layer (tread cap) and a radially inner layer (tread base), said radially inner layer including a crosslinked elastomeric composition compring at least one layered inorganic material.

The present invention moreover relates to a process for manufacturing said tyre.

In the field of production of tyres for vehicles wheels, the use of tread band of cap and base construction is known.

Conventionally, a tread cap is designed to come into contact with the ground and thus is conventionally configured with grooves of variuos shape so as to define a plurality of blocks of variuos shapes and sizes and usually comprises an elastomeric composition intended to provide suitable traction, rolling resistance and treadwear for the tyre.

The associated tread base, which is conventionally co-extruded or calendered with and underlies the tread cap, is not normally intended to come into contact with the ground and usually comprises an elastomeric composition having both mechanical properties (both static and dinamic) and hysteretic properties different with respect to those of the elastomeric composition of the tread cap.

Normally, in particular in the case of tyre of winter type, i.e. tyres which, without using snow studs or other mechanical expedients, are able to ensure good performances (for example, good road grip, good steering stability, good ride confort) even in the presence of extreme atmospheric and ground conditions, in particular very low temperatures on icy and/or snowy ground, the elastomeric composition of the tread base has higher mechanical properties and lower hysteresis values with respect to the elastomeric composition of the tread cap.

As already disclosed above, tread bands of cap and base construction are known in the art.

For example, US 4 635 693 corresponding with the preamble of claims 1 and 32, respectively, describes a pneumatic tyre having a cap tread and a base tread wherein:

(1) said cap tread is made of a rubber material in which 100 pts. wt. of rubber component comprising at least 50 pts. wt. of natural rubber and/or polyisoprene rubber, at most 50 pts. wt. of polybutadiene rubber containing at most 20% of 1,2-bonding units and at most 50 pts. wt. of styrenebutadiene copolymer rubber containing at most 30 wt% of bonded styrene is incorporated with 50 to 100 pts. wt. of carbon black and with a softener in an amount satisfying the following equation:

$$1.1x - 44 < y < 1.1x - 30$$

where y is the total amount of the softener in pts. wt. and x is the amount of carbon black in pts. wt.; said softener having an overall solubility parameter in the range of from 8.0 to 9.0;

(2) said base tread is made of a rubber material in which 100 pts. wt. of rubber component comprising at least 60 pts. wt. of natural rubber and/or polyisoprene rubber, at most 40 pts. wt. of polybutadiene rubber containing at most 20% of 1,2-bonding units and at most 40 pts. wt. of styrenebutadiene copolymer rubber containing at most 30 wt% of bonded styrene is incorporated with 2.6 to 3.6 pts. wt. of sulfur; and

(3) said base tread has a volume fraction of 0.1 to 0.5 relative to total volume of the tread.

The abovementioned tyre is said to have a superior drivability on snow-covered or frozen road surfaces and is capable of retaining such a superior performance for a long time.

US 6 516 847 in the name of the Applicant, describes a low rolling resistance tyre for vehicles which comprises at least one belt layer coaxially extending around at least one carcass ply, a composite tread coaxially extending around the belt layer and comprising a radially outer layer and a radially inner layer, wherein the ratio between the modulus of elasticity E' at 70°C of the radially inner layer and the modulus of elasticity E' at 70°C of the radially outer layer is comprised between 1.1 and 3, and the ratio betwen the value of Tan delta at 70°C of the radially inner layer and the value of Tan delta at 70°C of the radially outer layer is lower than 0.8. The abovementioned tyre is said to achieves a good compromise between the characteristics of rolling resistance, handling and comfort of the tyre.

US 2003/0015271 describes a tyre with rubber tread of cap/base construction. The tread base underlies the tread cap. The tread base is relatively thick, namely at least 50% of the thickness of the tread cap. It is desired that the tread base rubber composition contains a significant amount of sulfur to enhance the physical properties of the tread base. The tread base rubber composition contains a combination of anti-reversion agents to counteract a tendency for reversion of physical properties of the tread base which is relatively thick as compared to the tread cap. The combination of anti-reversion agents is 1,3-bis(citraconimidomethyl)benzene and hexamethylene-1,6-bis(thiosulfate), disodium salt, dihydrate. The abovementioned rubber composition is said to substantially maintain the integrity of the physical properties

of the tread base, to reduce tire operating temperature, as well as to delay or even eliminate groove cracking in the tread cap.

European Patent Application EP 1 270 656 describes a rubber composition for base tread comprising 30 to 40 parts by weight of carbon black having iodine adsorption amount of at least 115 $m^2/g$, 5 to 10 parts by weight of silica and 1.2 to 2.2 parts by weight of sulfur based on 100 parts by weight of a rubber component, wherein the total amount of the carbon black and the silica is at most 45 parts by weight. A pneumatic tyre using said rubber composition for base tread is also described. The abovementioned rubber composition is said to have reduced heat build-up characteristics and excellent reinforcing properties.

The Applicant has noticed that, in some cases, in particular in the case of winter tyre of very-high-performance type such as, for example, tyre designed for high-powered cars or, more generally, tyres intended for applications involving high operating speeds, in order to ensure the abovementioned good performances both in the extreme atmospheric and ground conditions and on a dry or wet ground, it is necessary to increase the mechanical properties, both the static properties (in particular tensile modulus values and hardness) and the dynamic properties (in particular the dynamic elastic modulus), of the elastomeric composition of the tread base.

Said tyres, which are commonly referred to as "HP" and "UHP" ("High Performance" and "Ultra High Performances" tyres, are in particular those belonging to the classes "V" and "Z" which respectively provide for maximum speeds of between 210 Km/h and 240 Km/h and higher than 240Km/h, for which good performances in every atmospheric and ground conditions is undoubtely one of the most important factor.

Different ways of increasing the mechanical properties of the elastomeric compositions are already known.

For example, hardness of the elastomeric compositions may be increased by increasing crosslinking density of these compositions by using a large amount of sulphur; or by using a large amount of carbon black, or a very fine and structured carbon black. However, the above ways of increasing hardness may lead to a number of drawbacks.

For example, it is known that the use of a large amount of sulphur may cause remarkable reversion phenomena, which result in modification of the tyre performance during use. On the other side, it is known that carbon black gives the crosslinked manufactured product pronounced hysteresis properties, that is to say an increase in the dissipated heat under dynamic conditions, which results in an increase in the rolling resistance of the tyre. In addition, a large amount of carbon black causes an increase in the viscosity of the elastomeric composition and, consequently, has a negative impact on the processability and extrudability of the composition.

To overcome the drawbacks caused by the use of carbon black, the so-called "white" reinforcing fillers are usually used, in particular silica, in total or partial replacement for the carbon black. However, although the use of said reinforcing fillers leads to good tear resistance, it also entails a series of drawbacks essentially related to the poor affinity of these fillers with respect to the elastomers commonly used in the production of tyres. In particular, to obtain a good degree of dispersion of the silica in the polymer matrix, it is necessary to subject the elastomer blends to a prolonged thermomechanical blending action. To increase the affinity of the silica with the elastomer matrix, it is necessary to use suitable coupling agents, such as, for example, sulphur-containing organosilane products. However, the need to use such coupling agents places a limitation on the maximum temperature which may be reached during the blending and thermomechanical processing operations of the composition, to avoid the penalty of an irreversible thermal degradation of the coupling agent.

Therefore, the Applicant has faced the problem of providing a tyre for vehicle wheels with a tread band of cap and base construction having good performances (good road grip, good steering stability, good ride confort) both in the presence of extreme atmospheric and ground conditions, in particular very low temperatures on icy and/or snowy ground, and on a dry or wet road. In particular, the Applicant has noticed that, in order to obtain said good performances, it is not sufficient to increase the mechanical properties of the elastomeric compositions of the tread base, but that it is necessary to provide elastomeric compositions wherein said increasing is obtained without causing undesired effects on other properties such as, for example:

- viscosity, in particular too high viscosity values have to be prevented thus making it possible to obtain elastomeric compositions with good processability and good extrudability;
- hysteresis (Tan delta values), in particular too high hysteresis values have to be prevented in order to avoid a too high rolling resistance;
- green adhesiveness in order to avoid displacements between the different structural elements of the tyres during the manufacturing process.

The Applicant has now found that it is possible to obtain tyres showing the performances above reported utilizing a tread base which comprises a crosslinkable elastomeric composition to which at least one layered inorganic material is added. The addition of said layered inorganic material allows to increase the mechanical properties of the elastomeric composition without observing undesired effects on its remaining properties (i.e. viscosity, hysteresis, green adhesiveness).

According to a first aspect, the present invention relates to a tyre for vehicle wheels, comprising:

- a carcass structure with at least one carcass ply shaped in a substantially toroidal configuration, the opposite lateral edges of which are associated with respective right-hand and left-hand bead wires, each bead wire being enclosed in a respective bead;
- a belt structure comprising at least one belt strip applied in a circumferentially external position relative to said carcass structure;
- a tread band superimposed circumferentially on said belt structure comprising a radially outer layer designed to come into contact with the ground and a radially inner layer interposed between said radially outer layer and said belt structure;
- a pair of sidewalls applied laterally on opposite sides relative to said carcass structure;

wherein said radially inner layer includes a crosslinked elastomeric composition comprising:

(a) at least one diene elastomeric polymer;
(b) at least one layered inorganic material having an individual layer thickness of from 0.01 nm to 30 nm, preferably from 0.05 nm to 15 nm.

According to a further aspect, the present invention relates to a process for manufacturing a tyre for vehicle wheels, said process comprising the following steps:

- manufacturing a green tyre by assembling at least one carcass ply, a belt structure in a circumferentially outer position with respect to said carcass ply, a tread band in a circumferentially outer position with respect to said belt structure, said tread band comprising a radially outer layer designed to come into contact with the ground and a radially inner layer interposed between said radially outer layer and said belt structure;
- subjecting the green tyre to moulding in a mould cavity formed in a vulcanization mould;
- subjecting said green tyre to crosslinking by heating;

wherein said radially inner layer includes a crosslinkable elastomeric composition comprising:

(a) at least one diene elastomeric polymer;
(b) at least one layered inorganic material having an individual layer thickness of from 0.01 nm to 30 nm, preferably from 0.05 nm to 15 nm.

According to a further preferred embodiment, said radially inner layer is obtained by winding at least one ribbon-like strip consisting of said crosslinkable elastomeric composition in side by side coils. Preferably, also the radially outer layer of the tread band is obtained by winding at least one ribbon-like strip consisting of a crosslinkable elastomeric composition in side by side coils. Said ribbon-like strip may be produced, for example, by extruding said crosslinkable elastomeric composition. Preferably, the green tyre is obtained by assembling its structural elements onto a toroidal support. Further details of the methods of forming and/or depositing the various components of the tyre on a toroidal support are described, for example, in International Patent Application WO 01/36185 and in European Patent EP 976 536 in the name of the Applicant.

According to one preferred embodiment, said elastomeric composition further comprises (c) at least one carbon black reinforcing filler.

According to one preferred embodiment, said radially inner layer is formed by a crosslinked elastomeric composition having a dynamic elastic modulus (E'), at 23°C, of from 10 MPa to 30 MPa, preferably of from 15 MPa to 20 MPa. Said dynamic elastic modulus may be measured using an Instron dynamic device in the traction-compression mode according to the procedure described in the following examples.

According to one preferred embodiment, said radially inner layer has a thickness of at least 10%, preferably between 20% and 70%, with respect to the total thickness of the tread band.

According to one preferred embodiment, said elastomeric composition further comprises at least one silane coupling agent (d).

According to one preferred embodiment, said layered inorganic material (b) is present in the elastomeric composition in an amount of from 1 phr to 120 phr, preferably from 5 phr to 80 phr.

For the purposes of the present description and of the claims which follows, the term "phr" means the parts by weight of a given component of the elastomeric composition per 100 parts by weight of the diene elastomeric polymer.

According to one preferred embodiment, the layered inorganic material (b) which may be used in the present invention may be selected, for example, from phyllosilicates such as: smectites, for example, montmorillonite, nontronite,

beidellite, volkonskoite, hectorite, saponite, sauconite; vermiculite; halloisite; sericite; or mixtures thereof. Montmorillonite is particularly preferred.

In order to render the layered inorganic material (b) more compatible with the diene elastomeric polymer (a) said layered inorganic material (b) may be surface-treated with a compatibilizer.

According to one preferred embodiment, said compatibilizer may be selected, for example, from the quaternary ammonium or phosphonium salts having general formula (I):

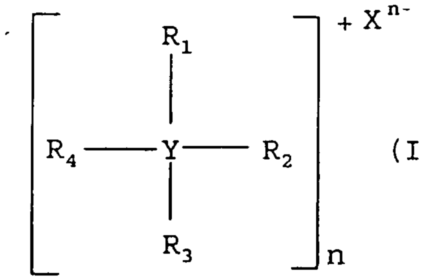

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulphur;
- $X^n$- represents an anion such as the chlorine ion, the sulphate ion or the phosphate ion;
- n represents 1, 2 or 3.

The surface treatment of the layered inorganic material (b) with the compatibilizer can be carried out according to known methods such as, for example, by an ion exchange reaction between the layered inorganic material and the compatibilizer: further details are described, for example, in patents US 4 136 103, US 5 747 560 or US 5 952 093.

Example of layered inorganic material (b) which may be used according to the present invention and is available commercially is the product known by the name of Dellite® 67G from Laviosa Chimica Mineraria S.p.A.

According to one preferred embodiment, the diene elastomeric polymer (a) which may be used in the present invention may be selected from those commonly used in sulphur-crosslinkable elastomeric compositions, that are particularly suitable for producing tyres, that is to say from elastomeric polymers or copolymers with an unsaturated chain having a glass transition temperature ($T_g$) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, $\alpha$-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, said elastomeric composition comprises at least 10% by weight,

preferably between 20% by weight and 90% by weight, with respect to the total weight of the at least one diene elastomeric polymer (a), of natural rubber.

The above reported elastomeric composition may optionally comprise at least one elastomeric polymer of one or more monoolefins with an olefinic comonomer or derivatives thereof (a'). The monoolefins may be selected from: ethylene and $\alpha$-olefins generally containing from 3 to 12 carbon atoms, such as, for example, propylene, 1-butene, 1-pentene, 1-hexene, 1-octene, or mixtures thereof. The following are preferred: copolymers between ethylene and an $\alpha$-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

As disclosed above, said elastomeric composition further comprises at least one carbon black reinforcing filler (c).

According to one preferred embodiment, the carbon black reinforcing filler (c) which may be used in the present invention may be selected from those having a surface area of not less than 20 $m^2/g$ (determined by CTAB absorption as described in ISO standard 6810).

According to one preferred embodiment, said carbon black reinforcing filler (c) is present in the elastomeric composition in an amount of from 0.1 phr to 120 phr, preferably from 20 phr to 90 phr.

As disclosed above, said elastomeric composition further comprises at least one silane coupling agent (d).

According to one preferred embodiment, the silane coupling agent (d) which may be used in the present invention may be selected from those having at least one hydrolizable silane group which may be identified, for example, by the following general formula (II):

$$(R)_3Si-C_nH_{2n}-X \qquad (II)$$

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, $-(S)_mC_nH_{2n}-Si-(R)_3$ in which m and n are integers between 1 and 6 inclusive and the groups R are defined as above.

Among the silane coupling agents that are particularly preferred are bis(3-triethoxysilylpropyl)tetrasulphide and bis(3-triethoxysilylpropyl)-disulphide. Said coupling agents may be used as such or as a suitable mixture with an inert filler (for example carbon black) so as to facilitate their incorporation into the elastomeric composition.

According to one preferred embodiment, said silane coupling agent (d) is present in the elastomeric composition in an amount of from 0.01 phr to 10 phr, preferably from 0.5 phr to 5 phr.

At least one additional reinforcing filler may advantageously be added to the above reported elastomeric composition, in an amount generally of from 0.1 phr to 120 phr, preferably from 20 phr to 90 phr. The reinforcing filler may be selected from those commonly used for crosslinked manufactured products, in particular for tyres, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from 50 $m^2/g$ to 500 $m^2/g$, preferably from 70 $m^2/g$ to 200 $m^2/g$.

When a reinforcing filler comprising silica is present, the elastomeric composition may advantageously incorporate a silane coupling agent (d) capable of interacting with the silica and of linking it to the diene elastomeric polymer during the vulcanization. Examples of silane coupling agent (d) which may be used have been already disclosed above.

According to one preferred embodiment, the radially outer layer (tread cap) of the tyre tread band is formed by a crosslinked elastomeric composition having a dynamic elastic modulus (E'), at 0°C, of from 5 MPa to 15 MPa, preferably of from 8 MPa to 10 MPa. Said dynamic elastic modulus may be measured using an Instron dynamic device in the traction-compression mode according to the procedure described in the following examples. Preferably, said crosslinked elastomeric composition comprises at least one diene elastomeric polymer and at least one reinforcing filler selected from those commonly used in sulphur-crosslinkable elastomeric compositions, that are particularly suitable for producing tyres, such as, for example, those above disclosed for the crosslinkable composition of the radially inner layer (tread base).

The elastomeric compositions above reported, both for the tread base and the tread cap, may be vulcanized according to known techniques, in particular with sulphur-based vulcanizing systems commonly used for diene elastomeric polymers. To this end, in the composition, after one or more stages of thermomechanical processing, a sulphur-based vulcanizing agent is incorporated together with vulcanization accelerators. In the final processing stage, the temperature is generally kept below 120°C and preferably below 100°C, so as to avoid any unwanted pre-crosslinking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, $ZnCO_3$, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, $Pb_3O_4$, $PbO_2$, or mixtures thereof.

Accelerators that are commonly used may be selected from: dithiocarbamates, guanidine, thiourea, thiazoles, sulphenamides, thiurams, amines, xanthates, or mixtures thereof.

Said elastomeric compositions may comprise other commonly used additives selected on the basis of the specific application for which the composition is intended. For example, the following may be added to said composition: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said elastomeric composition. The amount of plasticizer generally ranges from 0 phr to 70 phr, preferably from 5 phr to 30 phr.

The above reported elastomeric compositions may be prepared by mixing together the polymeric components with the reinforcing filler and with the other additives optionally present according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss) or of corotating or counter-rotating twin-screw type.

The present invention will now be illustrated in further detail by means of a number of illustrative embodiments, with reference to the attached drawing, wherein:

- Fig. 1 is a view in cross section of a tyre made according to the present invention;
- Fig. 2 is an enlarged scale cross section view of some details of the tyre tread band of Fig. 1.

A tyre for vehicle wheels according to the present invention has been generally identified by reference number (1).

With reference to Fig. 1, m-m indicates the equatorial plane of the tyre (1).

The tyre (1) comprises a carcass structure (2) comprising at least one carcass ply (3), the opposite lateral edges (3a) of which are associated with respective bead wires (4). The association between the carcass ply (3) and the bead wires (4) is achieved here by folding back the opposite lateral edges (3a) of the carcass ply (3) around the bead wires (4) so as to form the so-called carcass back-folds (3a) as shown in Fig. 1.

Alternatively, the conventional bead wires (4) may be replaced with a pair of circumferentially inextensible annular inserts formed from elongate components arranged in concentric coils (not represented in Fig. 1) (see, for example, European patent applications EP 928 680 and EP 928 702 in the name of the Applicant). In this case, the carcass ply (3) is not back-folded around said annular inserts, the coupling being provided by a second carcass ply (not represented in Fig. 1) applied externally over the first.

The carcass ply (3) generally consists of a plurality of reinforcing cords arranged parallel to each other and at least partially coated with a layer of elastomeric material. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (3) is usually of radial type, i.e. it incorporates reinforcing cords arranged in a substantially perpendicular direction relative to a circumferential direction. Each bead wire (4) is enclosed in a bead (5), defined along an inner circumferential edge of the tyre (1), with which the tyre engages on a rim (not represented in Fig. 1) forming part of a vehicle wheel. The space defined by each carcass back-fold (3a) contains a bead filler (4a) in which the bead wires (4) are embedded. An antiabrasive strip (not represented in Fig. 1) may be placed in an axially external position relative to the carcass back-fold (3a).

A belt structure (6) is applied along the circumference of the carcass ply (3). In the particular embodiment of Fig. 1, the belt structure (6) comprises two belt strips (7a, 7b) which incorporate a plurality of reinforcing cords, typically metal cords, which are parallel to each other in each strip and intersecting with respect to the adjacent strip, oriented

so as to form a predetermined angle relative to a circumferential direction. On the radially outermost belt strip (7a) may optionally be applied at least one zero-degree reinforcing layer (8), commonly known as a "0° belt", which generally incorporates a plurality of reinforcing cords, typically textile cords, arranged at an angle of a few degrees relative to a circumferential direction, and coated and welded together by means of an elastomeric material.

A sidewall (9) is also applied externally onto the carcass ply (3), this sidewall extending, in an axially external position, from the bead (5) to the end of the belt structure (6).

A tread band (10), whose lateral edges are connected to the sidewalls (9), is applied circumferentially in a position radially external to the belt structure (6). In particular, as represented in Fig. 1 and Fig. 2, a tread band (10) is of cap and base construction, more in particular said tread band (10) comprises a radially inner layer or tread base (11) and a radially outer layer or tread cap (12), said tread cap (12) having a rolling surface designed to come into contact with the ground. Circumferential grooves (13) which are connected by transverse notches so as to define a plurality of blocks of various shapes and sizes distributed over the rolling surface are generally made in this surface.

As represented in Fig. 1 and Fig. 2, the tread base (11) has a uniform thickness.

In any case, the thickness of the tread base (11) may also be not uniform but, for example, greater near its outer edges and/or at the central zone thereof.

The tread cap (12) should have a thickness at least equal to, and preferably greater than, the thickness of the grooves (13), so as not to allow the tread base (11) to come into contact with the ground when the tread cap (12) is worn out.

A strip made of elastomeric material, commonly known as a "mini-sidewall" (not represented in Fig. 1), may optionally be present in the connecting zone between the sidewalls (9) and the tread band (10), this mini-sidewall generally being obtained by co-extrusion with the tread band (10) and allowing an improvement in the mechanical interaction between the tread band (10) and the sidewalls (9). Alternatively, the end portion of the sidewall (9) directly covers the lateral edge of the tread band (10).

A layer of elastomeric material (not represented in Fig. 1) which serves as an attachment sheet to provide connection between the tread band (10) and the belt structure (6), may be placed between the tread band (10) and the belt structure (6).

In the case of tubeless tyres, a rubber layer (not represented in Fig. 1) generally known as a "liner", which provides the necessary impermeability to the inflation air of the tyre, may also be provided in a radially internal position relative to the carcass ply (3).

The process for producing the tyre according to the present invention may be carried out according to techniques and using apparatus that are known in the art, as described, for example, in patents EP 199 064, US 4 872 822, US 4 768 937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various structural elements of the tyre (carcass plies, belt structure, bead wires, fillers, sidewalls and tread band) which are then combined together using a suitable manufacturing machine. Next, the subsequent vulcanization stage welds the abovementioned semi-finished products together to give a monolithic block, i.e. the finished tyre.

The stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned patent applications EP 928 680 and EP 928 702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained as described, for example, in patent EP 242 840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to

obtain a satisfactory degree of vulcanization throughout the mass of the elastomeric material can vary in general between 3 min and 90 min and depends mainly on the dimensions of the tyre. When the vulcanization is complete, the tyre is removed from the vulcanization mould.

The present invention will be further illustrated below by means of a number of preparation examples, which are given for purely indicative purposes and without any limitation of this invention.

EXAMPLES 1-3

Preparation of the elastomeric compositions

The elastomeric compositions given in Table 1 were prepared as follows (the amounts of the various components are given in phr).

All the components, except sulphur, accelerator (CBS) and retardant (PVI), were mixed together in an internal mixer (model Pomini PL 1.6) for about 5 min (1st Step). As soon as the temperature reached 145$\pm$5°C, the elastomeric composition was discharged. The sulphur, the accelerator and the retardant, were then added and mixing was carried out in an open roll mixer (2nd Step).

TABLE 1

| EXAMPLE | 1 (*) | 2 | 3 |
|---|---|---|---|
| 1st STEP | | | |
| NR | 70 | 70 | 70 |
| E-SBR 1500 | 30 | 30 | 30 |
| N375 | 75 | 75 | 75 |
| Zinc Oxide | 4 | 4 | 4 |
| Stearic Acid | 2 | 2 | 2 |
| Antioxidant | 2 | 2 | 2 |
| Aromatic Oil | 10 | 10 | 10 |
| TESPT | - | 1 | - |
| Dellite® 67G | - | 10 | 10 |
| 2nd STEP | | | |
| CBS | 1.8 | 1.8 | 1.8 |
| Sulphur | 2.7 | 2.7 | 2.7 |

(continued)

| EXAMPLE | 1 (*) | 2 | 3 |
|---|---|---|---|
| PVI | 0.3 | 0.3 | 0.3 |

(*): comparative.
NR: natural rubber;
E-SBR 1500: emulsion-prepared butadiene-styrene copolymer (Europrene® 1500 - Polimeri Europa);
N375: carbon black;
Antioxidant: phenyl-p-phenylenediamine;
TESPT: bis(3-triethoxysilylpropyl)tetrasulphide (X50S comprising 50% of carbon black and 50% of silane - Degussa-Hüls - the reported amount relates to the silane amount);
Dellite® 67G: organo-modified montmorillonite belonging to the smectite family (Laviosa Chimica Mineraria S.p.A.);
CBS (accelerator): N-cyclohexyl-2-benzothiazylsulphenamide (Vulkacit® CZ - Bayer).
PVI (retardant): N-cyclohexylthiophthalimide (Santogard® PVI - Monsanto).

The Mooney viscosity ML(1+4) at 100°C was measured, according to ISO standard 289/1, on the non-crosslinked materials obtained as described above. The results obtained are given in Table 2.

The static mechanical properties were measured on samples of the abovementioned elastomeric compositions vulcanized at 151°C for 30 min, according to ISO standard 37, and hardness in IRHD degrees was measured at 23°C and at 100°C (according to ISO standard 48). The results obtained are given in Table 2.

Table 2 also shows the dynamic mechanical properties, measured using an Instron dynamic device in the traction-compression mode according to the following methods. A test piece of the crosslinked material having a cylindrical form (length = 25 mm; diameter = 14 mm), compression-prelo»zaded up to a 10% longitudinal deformation with respect to the initial length, and kept at the prefixed temperature (23°C or 70°C) for the whole duration of the test, was submitted to a dynamic sinusoidal strain having an amplitude of ±3.33% with respect to the length under pre-load, with a 10 Hz frequency. The dynamic mechanical properties are expressed in terms of dynamic elastic modulus (E') and Tan delta (loss factor) values. As is known, the Tan delta value is calculated as a ratio between the viscous modulus (E") and the elastic modulus (E'), both of them being determined with the above dynamic measurements.

TABLE 2

| EXAMPLE | 1 (*) | 2 | 3 |
|---|---|---|---|
| Viscosity ML(1+4) | 75 | 78 | 83 |
| STATIC MECHANICAL PROPERTIES | | | |
| 10% modulus (MPa) | 1.23 | 1.53 | 1.35 |
| 50% modulus (MPa) | 2.90 | 3.70 | 3.26 |
| 100% modulus (MPa) | 5.60 | 7.40 | 6.70 |
| IRHD hardness at 23°C | 83.0 | 85.7 | 84.1 |
| IRHD hardness at 70°C | 74.3 | 75.1 | 74.6 |
| DYNAMIC MECHANICAL PROPERTIES | | | |
| E' (23°C) | 15.14 | 17.39 | 16.52 |
| E' (70°C) | 10.40 | 12.53 | 11.90 |

(continued)

| EXAMPLE | 1 (*) | 2 | 3 |
|---|---|---|---|
| Tan delta (23°C) | 0.306 | 0.297 | 0.302 |
| Tan delta (70°C) | 0.208 | 0.210 | 0.213 |
| (*):comparative. | | | |

The results given in Table 2 show that the crosslinked manufactured product obtained from the elastomeric compositions as disclosed in the present invention (Examples 2 and 3) have improved mechanical properties, in particular with regard to tensile modulus, hardness and dynamic elastic modulus. Said result is obtained without significantly increasing their hysteresis properties. In addition, the results given in Table 2 also show that the viscosity values of said elastomeric composition have not been significantly increased.

EXAMPLE 4

A tyre having size 265/35 R18 with tread band of cap and base construction according to the present invention, was manufactured.

The elastomeric composition of Example 2 was used to prepare the radially inner layer (tread base).

The elastomeric composition for the radially outer layer (tread cap) given in Table 3 was prepared as disclosed in Example 1-3 (the amounts of the various components are given in phr unless otherwise indicated).

TABLE 3

| EXAMPLE | 4 |
|---|---|
| 1st STEP | |
| NR | 25 |
| S-SBR | 45 |
| BR | 30 |
| Silica | 70 |
| Aromatic oil | 25 |
| Zinc oxide | 2.5 |
| Stearic acid | 2 |
| Antioxidant | 2 |
| Microcrystalline wax | 1.5 |
| TESPT | 11.2 |
| 2nd STEP | |
| DPG | 1.9 |
| CBS | 1.7 |
| Sulphur | 1.2 |

(continued)

| EXAMPLE | 4 |
| --- | --- |
| PVI | 0.3 |
| NR: natural rubber; S-SBR 1500: solution-prepared butadiene-styrene copolymer (Buna VLS"' 5025-1 HM - Bayer); BR: high-cis 1,3 polybutadiene (Europrene® Neocis BR60 - Enichem); Silica: Ultrasil® VN3 (Degussa); Antioxidant: N-1,3-dimethylbutyl-N'-p-phenylendiamine (Vulkanox® 4020 - Bayer); TESPT: bis(3-triethoxysilylpropyl) tetrasulphide (X50S comprising 50% of carbon black and 50% of silane - Degussa-Hüls - the reported amount relates to the silane amount); DPG (accelerator): diphenyl guanidine (Vulkacit® D - Bayer); CBS (accelerator): N-cyclohexyl-2-benzothiazylsulphenamide (Vulkacit® CZ - Bayer). PVI (retardant): N-cyclohexylthiophthalimide (Santogard® PVI - Monsanto). | |

The viscosity, the static mechanical properties and the dynamic mechanical properties, were measured as reported in Examples 1-3. The results obtained were given in Table 4.

TABLE 4

| EXAMPLE | 4 |
| --- | --- |
| Viscosity ML(1+4) | 64 |
| STATIC MECHANICAL PROPERTIES | |
| 100% Modulus (MPa) | 1.7 |
| 300% Modulus (MPa) | 7.0 |
| Stress at break (MPa) | 15.5 |
| IRHD hardness at 23°C | 70.0 |
| IRHD hardness at 100°C | 63.0 |
| DYNAMIC MECHANICALPROPERTIES | |
| E' (0°C) | 8.80 |
| E' (23°C) | 7.48 |
| E' (70°C) | 6.27 |
| Tan delta (0°C) | 0.398 |
| Tan delta (23°C) | 0.260 |
| Tan delta (70°C) | 0.149 |

The tread band was produced by co-extrusion of the above elastomeric compositions to form a cap and base construction.

## Claims

1. Tyre for vehicle wheels comprising:

   - a carcass structure (2) with at least one carcass ply (3) shaped in a substantially toroidal configuration, the opposite lateral edges (3a) of which are associated with respective right-hand and left-hand bead wires (4), each bead wire being enclosed in a respective bead (5);
   - a belt structure (6) comprising at least one belt strip (7a, 7b) applied in a circumferentially external position relative to said carcass structure (2);
   - a tread band (10) superimposed circumferentially on said belt structure (6) comprising a radially outer layer (12) designed to come into contact with the ground and a radially inner layer (11) interposed between said radially outer layer and said belt structure (6);
   - a pair of sidewalls (9) applied laterally on opposite sides relative to said carcass structure (2),

   **characterized in that**
   said radially inner layer (11) includes a crosslinked elastomeric composition comprising:

   (a) at least one diene elastomeric polymer;
   (b) at least one layered inorganic material having an individual layer thickness of from 0.01 nm to 30 nm.

2. Tyre for vehicle wheels according to claim 1, wherein the layered inorganic material (b) has an individual layer thickness of from 0.05 nm to 15 nm.

3. Tyre for vehicle wheels according to claim 1 or 2, wherein the radially inner layer (11) is formed by a crosslinked elastomeric composition having a dynamic elastic modulus (E'), at 23°C, of from 10 MPa to 30 MPa.

4. Tyre for vehicle wheels according to claim 3, wherein the radially inner layer (11) is formed by a crosslinked elastomeric composition having a dynamic elastic modulus (E'), at 23°C, of from 15 MPa to 20 MPa.

5. Tyre for vehicle wheels according to any one of the preceding claims, wherein the radially inner layer (11) has a thickness of at least 10% with respect to the total thickness of the tread band.

6. Tyre for vehicle wheels according to claim 5, wherein the radially inner layer (11) has a thickness of between 20% and 70% with respect to the total thickness of the tread band.

7. Tyre for vehicle wheels according to any one of the preceding claims, wherein the layered inorganic material (b) is present in the elastomeric composition in an amount of from 1 phr to 120 phr.

8. Tyre for vehicle wheels according to claim 7 wherein the layered inorganic material (b) is present in the elastomeric composition in an amount of from 5 phr to 80 phr.

9. Tyre for vehicle wheels according to any one of the preceding claims, wherein the layered inorganic material (b) is selected from phyllosilicates such as: smectites, for example, montmorillonite, nontronite, beidellite, volkonskoite, hectorite, saponite, sauconite; vermiculite; halloisite; sericite; or mixtures thereof.

10. Tyre for vehicle wheels according to claim 9, wherein the layered inorganic material (b) is montmorillonite.

11. Tyre for vehicle wheels according to claim 9 or 10, wherein the layered inorganic material (b) is surface-treated with a compatibilizer.

12. Tyre for vehicle wheels according to claim 11, wherein the compatibilizer is selected from the quaternary ammonium or phosphonium salts having general formula (I):

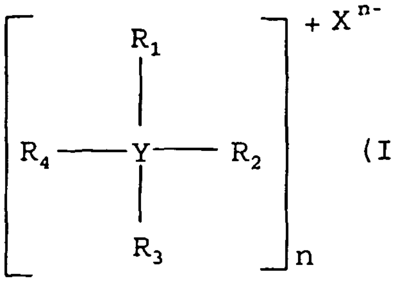

(I)

wherein:

- Y represents N or P;
- $R_1$, $R_2$, $R_3$ and $R_4$, which may be identical or different, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulphur;
- $X^{n-}$ represents an anion such as the chlorine ion, the sulphate ion or the phosphate ion;
- n represents 1, 2 or 3.

**13.** Tyre for vehicle wheels according to any one of the preceding claims, wherein the diene elastomeric polymer (a) has a glass transition temperature below 20°C.

**14.** Tyre for vehicle wheels according to claim 13, wherein the diene elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene, copolymers, styrene/isoprene/1,3-butadiene copolymers, styrene/1,3-butadiene/acrylonitrile copolymers, or mixtures thereof.

**15.** Tyre for vehicle wheels according to any one of the preceding claims, wherein the elastomeric composition comprises at least 10% by weight with respect to the total weight of the at least one diene elastomeric polymer (a) of natural rubber.

**16.** Tyre for vehicle wheels according to claim 15, wherein the elastomeric composition comprises between 20% by weight and 90% by weight with respect to the total weight of the at least one diene elastomeric polymer (a) of natural rubber.

**17.** Tyre for vehicle wheels according to any one of the preceding claims, wherein the elastomeric composition further comprises at least one elastomeric polymer of one or more monoolefins with an olefinic comonomer or derivatives thereof (a').

**18.** Tyre for vehicle wheels according to claim 17, wherein the elastomeric polymer (a') is selected from: ethylene/propylene copolymers (EPR) or ethylene/propylene/diene copolymers (EPDM); polyisobutene; butyl rubbers; halobutyl rubbers; or mixtures thereof.

**19.** Tyre for vehicle wheels according to any one of the preceding claims, wherein the elastomeric composition further comprises at least one carbon black filler (c).

**20.** Tyre for vehicle wheels according to claim 19, wherein the carbon black filler (c) has a surface area of not less than 20 $m^2/g$ (determined by CTAB absorption as described in ISO standarrd 6810).

**21.** Tyre for vehicle wheels according to claim 19 or 20, wherein the carbon black filler (c) is present in the elastomeric composition in an amount of from 0.1 phr to 120 phr.

**22.** Tyre for vehicle wheels according to claim 21, wherein the carbon black filler (c) is present in the elastomeric composition in an amount of from 20 phr to 90 phr.

**23.** Tyre for vehicle wheels according to any one of the preceding claims, wherein the elastomeric composition further comprises at least one silane coupling agent (d).

**24.** Tyre for vehicle wheels according to claim 23, wherein the silane coupling agent (d) is selected from those having at least one hydrolizable silane group which may be identified by the following general formula (II):

$$(R)_3Si\text{-}C_nH_{2n}\text{-}X \qquad (II)$$

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, - $(S)_mC_nH_{2n}$-Si-$(R)_3$ in which m and n are integers between 1 and 6 inclusive and the groups R are defined as above.

**25.** Tyre for vehicle wheels according to claim 23 or 24, wherein the silane coupling agent (d) is present in the elastomeric composition in an amount of from 0.01 phr to 10 phr.

**26.** Tyre for vehicle wheels according to claim 25, wherein the silane coupling agent (d) is present in the elastomeric composition in an amount of from 0.5 phr to 5 phr.

**27.** Tyre for vehicle wheels according to any one of the preceding claims, wherein at least one additional reinforcing filler is present, in an amount of from 0.1 phr to 120 phr, in the elastomeric composition.

**28.** Tyre for vehicle wheels according to claim 27, wherein the reinforcing filler is silica.

**29.** Tyre for vehicle wheels according to claim 28, wherein at least one silane coupling agent (d) is present.

**30.** Tyre for vehicle wheels according to any one of the preceding claims, wherein the radially outer layer of the tread band is formed by a crosslinked elastomeric composition having a dynamic elastic modulus, at 0°C, of from 5 MPa to 15 MPa.

**31.** Tyre for vehicle wheels according to claim 30, wherein the radially outer layer of the tread band is formed by a crosslinked elastomeric composition having a dynamic elastic modulus, at 0°C, of from 8 MPa to 10 Mpa.

**32.** Process for manufacturing a tyre for vehicle wheels, said process comprising the following steps:

- manufacturing a green tyre by assembling at least one carcass ply, a belt structure in a circumferentially outer position with respect to said carcass ply, a tread band in a circumferentially outer position with respect to said belt structure, said tread band comprising a radially outer layer designed to come into contact with the ground and a radially inner layer (11) interposed between said radially outer layer and said belt structure;
- subjecting the green tyre to moulding in a mould cavity formed in a vulcanization mould;
- subjecting said green tyre to crosslinking by heating,

**characterized in that**
said radially inner layer (11) includes a crosslinkable elastomeric composition comprising:

(a) at least one diene elastomeric polymer;
(b) at least one layered inorganic material having an individual layer thickness of from 0.01 nm to 30 nm.

**33.** Process for manufacturing a tyre for vehicle wheels according to claim 32, wherein the layered inorganic material (b) has an individual layer thickness of from from 0.05 nm to 15 nm.

**34.** Process for manufacturing a tyre for vehicle wheels according to claim 32, wherein the radially inner layer is obtained by winding at least one ribbon-like strip consisting of a crosslinkable elastomeric composition comprising:

(a) at least one diene elastomeric polymer;
(b) at least one layered inorganic material having an individual layer thickness of from 0.01 nm to 30 nm;

in side by side coils.

**35.** Process for manufacturing a tyre for vehicle wheels according to claim 34, wherein the layered inorganic material (b) has an individual layer thickness of from from 0.05 nm to 15 nm.

**36.** Process for manufacturing a tyre for vehicle wheels according to any one of claims 32 to 35, wherein the layered inorganic material (b) is defined according to any one of claims 7 to 12.

**37.** Process for manufacturing a tyre for vehicle wheels according to any one of claims 32 to 36, wherein the diene elatomeric polymer (a) is defined according to any one of claims 13 to 16.

**38.** Process for manufacturing a tyre for vehicle wheels according to any one of claims 32 to 37, wherein the elastomeric composition further comprises at least one elastomeric polymer of one or more monoolefins with an olefinic comonomer or derivatives thereof (a') as defined according to claim 18.

**39.** Process for manufacturing a tyre for vehicle wheels according to any one of claims 32 to 38, wherein the elastomeric composition further comprises at least one carbon black filler (c) as defined according to any one of claims 20 to 22.

**40.** Process for manufacturing a tyre for vehicle wheels according to any one of claims 32 to 39, wherein the elastomeric composition further comprises at least one coupling agent (d) as defined according to any one of claims 24 to 26.

**41.** Process for manufacturing a tyre for vehicle wheels according to any one of claims 32 to 40, wherein at least one additional reinforcing filler is present, in an amount of from 0.1 phr to 120 phr, in the elastomeric composition.

**42.** Process for manufacturing a tyre for vehicle wheels according to claim 41 wherein the reinforcing filler is silica.

**43.** Process for manufacturing a tyre for vehicle wheels according to claim 42, wherein at least one silane coupling agent (d) is present.

## Patentansprüche

**1.** Reifen für Fahrzeugräder, umfassend:

- eine Karkassenstruktur (2) mit mindestens eine, in einer im wesentlichen torusförmigen Konfiguration geformten Karkassenlage (3), deren gegenüberliegende Seitenränder mit den jeweiligen rechten und linken Wulstdrähten (4) in Zusammenhang stehen, wobei jeder Wulstdraht in einem entsprechenden Wulst (5) eingeschlossen ist;
- eine Gürtelstruktur (6), die mindestens einen Gürtelstreifen (7a, 7b) umfasst, der an einer in Umfangsrichtung äußeren Position relativ zu der Karkassenstruktur (2) angebracht ist;
- ein Laufflächenband (10), das in Umfangsrichtung auf der Gürtelstruktur (6) angebracht ist und eine radial äußere Schicht (12), die gestaltet ist, um in Kontakt mit dem Boden zu kommen, und eine radial innere Schicht (11), die zwischen der radial äußeren Schicht und der Gürtelstruktur (6) liegt, umfasst;
- ein Paar Seitenwände (9), die seitlich an gegenüberliegenden Seiten relativ zu der Karkassenstruktur (2) angebracht sind,

**dadurch gekennzeichnet, dass**
die radial innere Schicht (11) eine vernetzte Elastomerzusammensetzung einschließt, die umfasst:

(a) mindestens ein elastomeres Dien-Polymer;
(b) mindestens ein anorganisches Schichtmaterial mit einer Einzelschichtdicke von 0,01 bis 30 nm.

**2.** Reifen für Fahrzeugräder gemäß Anspruch 1, in dem das anorganische Schichtmaterial (b) eine Einzelschichtdicke von 0,05 bis 15 nm hat.

**3.** Reifen für Fahrzeugräder gemäß Anspruch 1 oder 2, in dem die radial innere Schicht (11) durch eine vernetzte Elastomerzusammensetzung gebildet ist, die einen dynamischen Elastizitätsmodul (E') bei 23°C von 10 bis 30 MPa hat.

**4.** Reifen für Fahrzeugräder gemäß Anspruch 3, in dem die radial innere Schicht (11) durch eine vernetzte Elastomerzusammensetzung gebildet ist, die einen dynamischen Elastizitätsmodul (E') bei 23°C von 15 bis 20 MPa hat.

**5.** Reifen für Fahrzeugräder gemäß mindestens einem der vorhergehenden Ansprüche, in dem die radial innere Schicht (11) eine Dicke von mindestens 10 % in Bezug auf die Gesamtdicke des Laufflächenbandes hat.

**6.** Reifen für Fahrzeugräder gemäß Anspruch 5, in dem die radial innere Schicht (11) eine Dicke von zwischen 20 und 70 % in Bezug auf die Gesamtdicke des Laufflächenbandes hat.

**7.** Reifen für Fahrzeugräder gemäß mindestens einem der vorhergehenden Ansprüche, in dem das anorganische Schichtmaterial (b) in der Elastomerzusammensetzung in einer Menge von 1 bis 120 phr vorliegt.

**8.** Reifen für Fahrzeugräder gemäß Anspruch 7, in dem das anorganische Schichtmaterial (b) in der Elastomerzusammensetzung in einer Menge von 5 bis 80 phr vorliegt.

**9.** Reifen für Fahrzeugräder gemäß mindestens einem der vorhergehenden Ansprüche, in dem das anorganische Schichtmaterial (b) ausgewählt ist aus Phyllosilikaten, wie: Smectiten, beispielsweise Montmorillonit, Nontronit, Beidellit, Volkonskoit, Hectorit, Saponit, Sauconit; Vermiculit; Halloisit; Sericit; oder Mischungen davon.

**10.** Reifen für Fahrzeugräder gemäß Anspruch 9, in dem das anorganische Schichtmaterial (b) Montmorillonit ist.

**11.** Reifen für Fahrzeugräder gemäß Anspruch 9 oder 10, in dem das anorganische Schichtmaterial (b) mit einem Kompatibilisierungsmittel oberflächenbehandelt ist.

**12.** Reifen für Fahrzeugräder gemäß Anspruch 11, in dem das Kompatibilisierungsmittel ausgewählt ist aus den quaternären Ammonium- oder Phosphoniumsalzen mit der allgemeinen Formel (I):

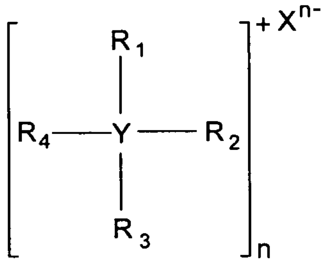

(I)

worin:

- Y N oder P bezeichnet;
- $R_1$, $R_2$, $R_3$ und $R_4$, die gleich oder verschieden sein können, eine lineare oder verzweigte $C_{1-20}$-Alkyl- oder Hydroxyalkylgruppe; eine lineare oder verzweigte $C_1$-$C_{20}$-Alkenyl- oder Hydroxyalkenylgruppe; eine Gruppe -$R_5$-SH oder -$R_5$-NH, worin $R_5$ eine lineare oder verzweigte $C_1$-$C_{20}$-Alkylengruppe bezeichnet; eine $C_6$-$C_{18}$-Arylgruppe; eine $C_7$-$C_{20}$-Arylalkylgruppe oder Alkylarylgruppe; eine $C_5$-$C_{18}$-Cycloalkylgruppe, wobei die Cycloalkylgruppe Heteroatom(e), wie Sauerstoff, Stickstoff oder Schwefel enthalten kann, bezeichnet;
- $X^{n-}$ ein Anion, wie das Chlorion, das Sulfation oder das Phosphation, bezeichnet;
- n 1, 2 oder 3 bezeichnet.

**13.** Reifen für Fahrzeugräder gemäß mindestens einem der vorhergehenden Ansprüche, in dem das elastomere Dien-Polymer (a) eine Glasübergangstemperatur unter 20°C hat.

**14.** Reifen für Fahrzeugräder gemäß Anspruch 13, in dem das elastomere Dien-Polymer (a) ausgewählt ist aus: cis-1,4-Polyisopren, 3,4-Polyisopren, Polybutadien, optional halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

**15.** Reifen für Fahrzeugräder gemäß mindestens einem der vorhergehenden Ansprüche, in dem die Elastomerzusammensetzung mindestens 10 Gew.% Naturkautschuk in Bezug auf das Gesamtgewicht des mindestens einen elastomeren Dien-Polymers (a) enthält.

16. Reifen für Fahrzeugräder gemäß Anspruch 15, in dem die Elastomerzusammensetzung zwischen 20 und 90 Gew. % Naturkautschuk in Bezug auf das Gesamtgewicht des mindestens einen elastomeren Dien-Polymers (a) enthält.

17. Reifen für Fahrzeugräder gemäß mindestens einem der vorhergehenden Ansprüche, in dem die Elastomerzusammensetzung ferner mindestens ein elastomeres Polymer von einem oder mehreren Monoolefinen mit einem olefinischen Comonomer oder Derivaten davon (a') enthält.

18. Reifen für Fahrzeugräder gemäß Anspruch 17, in dem das elastomere Polymer (a') ausgewählt ist aus:

Ethylen/Propylen-Copolymeren (EPR) oder
Ethylen/Propylen/Dien-Copolymeren (EPDM); Polyisobuten; Butylkautschuken; Halogenbutylkautschuken; oder
Mischungen davon.

19. Reifen für Fahrzeugräder gemäß mindestens einem der vorhergehenden Ansprüche, in dem die Elastomerzusammensetzung ferner mindestens einen Rußfüllstoff (c) enthält.

20. Reifen für Fahrzeugräder gemäß Anspruch 19, in dem der Fußfüllstoff (c) eine spezifische Oberfläche nicht weniger als 20 $m^2/g$ (bestimmt mittels CTAB-Absorption wie im ISO-Standard 6810 beschrieben) hat.

21. Reifen für Fahrzeugräder gemäß Anspruch 19 oder 20, in dem der Rußfüllstoff (c) in der Elastomerzusammensetzung in einer Menge von 0,1 bis 120 phr vorliegt.

22. Reifen für Fahrzeugräder gemäß Anspruch 21, in dem der Fußfüllstoff (c) in der Elastomerzusammensetzung in einer Menge von 20 bis 90 phr vorliegt.

23. Reifen für Fahrzeugräder gemäß mindestens einem der vorhergehenden Ansprüche, in dem die Elastomerzusammensetzung ferner mindestens einen Silanhaftvermittler (d) enthält.

24. Reifen für Fahrzeugräder gemäß Anspruch 23, in dem der Silanhaftvermittler (d) ausgewählt ist aus denjenigen mit mindestens einer hydrolisierbaren Silangruppe, die durch die folgende allgemeine Formel (II) wiedergegeben werden können:

$$(R)_3Si\text{-}C_nH_{2n}\text{-}X \qquad (II)$$

worin die Gruppen R, die gleich oder verschieden sein können, ausgewählt sind aus: Alkyl-, Alkoxy- oder Aryloxygruppen oder aus Halogenatomen unter der Bedingung, dass mindestens eine der Gruppen R eine Alkoxy- oder Aryloxygruppe ist; n eine ganze Zahl zwischen 1 und 6 einschließlich ist; X eine Gruppe ist, die ausgewählt ist aus: Nitroso, Mercapto, Amino, Epoxid, Vinyl, Imid, Chloro, $-(S)_mC_nH_{2n}\text{-}Si\text{-}(R)_3$, worin m und n ganze Zahlen zwischen 1 und 6 einschließlich sind und die Gruppen R wie oben definiert sind.

25. Reifen für Fahrzeugräder gemäß Anspruch 23 oder 24, in dem der Silanhaftvermittler (d) in der Elastomerzusammensetzung in einer Menge von 0,01 bis 10 phr vorliegt.

26. Reifen für Fahrzeugräder gemäß Anspruch 25, in dem der Silanhaftvermittler (d) in der Elastomerzusammensetzung in einer Menge von 0,5 bis 5 phr vorliegt.

27. Reifen für Fahrzeugräder gemäß mindestens einem der vorhergehenden Ansprüche, in dem mindestens ein zusätzlicher Verstärkungsfüllstoff in einer Menge von 0,1 bis 120 phr in der Elastomerzusammensetzung vorliegt.

28. Reifen für Fahrzeugräder gemäß Anspruch 27, in dem der Verstärkungsfüllstoff Silica ist.

29. Reifen für Fahrzeugräder gemäß Anspruch 28, in dem mindestens ein Silanhaftvermittler (d) vorliegt.

30. Reifen für Fahrzeugräder gemäß mindestens einem der vorhergehenden Ansprüche, in dem die radial äußere Schicht des Laufflächenbandes durch eine vernetzte Elastomerzusammensetzung mit einem dynamischen Elastizitätsmodul bei 0°C von 5 bis 15 MPa gebildet ist.

**31.** Reifen für Fahrzeugräder gemäß Anspruch 30, in dem die radial äußere Schicht des Laufflächenbandes durch eine vernetzte Elastomerzusammensetzung mit einem dynamischen Elastizitätsmodul bei 0°C von 8 bis 10 MPa gebildet ist.

**32.** Verfahren zur Herstellung eines Reifens für Fahrzeugräder, wobei das Verfahren die folgenden Schritte umfasst:

- eines Grünreifens durch Zusammensetzen mindestens einer Karkassenlage, einer Gürtelstruktur in einer in Umfangsrichtung äußeren Position in Bezug auf die Karkassenlage, eines Laufflächenbandes in einer in Umfangsrichtung äußeren Position in Bezug auf die Gürtelstruktur, wobei das Laufflächenband eine radial äußere Schicht, die ausgebildet ist, um mit dem Boden in Kontakt zu kommen, und eine radial innere Schicht (11), die zwischen die radial äußere Schicht und die Gürtelstruktur gelegt ist, umfasst;
- Formen des Grünreifens in einem Formhohlraum, der in einem Vulkanisationsformwerkzeug ausgebildet ist;
- Vernetzen des Grünreifens durch Erhitzen,

**dadurch gekennzeichnet, dass**
die radial innere Schicht (11) eine vernetzbare Elastomerzusammensetzung einschließt, die umfasst:

(a) mindestens ein elastomeres Dien-Polymer;
(b) mindestens ein anorganisches Schichtmaterial mit einer Einzelschichtdicke von 0,01 bis 30 nm.

**33.** Verfahren zur Herstellung eines Reifens für Fahrzeugräder gemäß Anspruch 32, bei dem das anorganische Schichtmaterial (b) eine Einzelschichtdicke von 0,05 bis 15 nm hat.

**34.** Verfahren zur Herstellung eines Reifens für Fahrzeugräder gemäß Anspruch 32, bei dem die radial innere Schicht erhalten wird, indem mindestens ein bandartiger Streifen, der aus einer vernetzbaren Elastomerzusammensetzung besteht, die

(a) mindestens ein elastomeres Dien-Polymer;
(b) mindestens ein anorganisches Schichtmaterial mit einer Einzelschichtdicke von 0,01 bis 30 nm enthält,

in nebeneinanderliegende Windungen gewickelt wird.

**35.** Verfahren zur Herstellung eines Reifens für Fahrzeugräder gemäß Anspruch 34, bei dem das anorganische Schichtmaterial (b) eine Einzelschichtdicke von 0,05 bis 15 nm hat.

**36.** Verfahren zur Herstellung eines Reifens für Fahrzeugräder gemäß mindestens einem der Ansprüche 32 bis 35, bei dem das anorganische Schichtmaterial (b) gemäß mindestens einem der Ansprüche 7 bis 12 definiert ist.

**37.** Verfahren zur Herstellung eines Reifens für Fahrzeugräder gemäß mindestens einem der Ansprüche 32 bis 36, bei dem das elastomere Dien-Polymer (a) gemäß mindestens einem der Ansprüche 13 bis 16 definiert ist.

**38.** Verfahren zur Herstellung eines Reifens für Fahrzeugräder gemäß mindestens einem der Ansprüche 32 bis 37, bei dem die Elastomerzusammensetzung ferner wenigstens ein elastomeres Polymer aus einem oder mehreren Monoolefinen mit einem olefinischen Comonomer oder Derivaten davon (a'), wie gemäß Anspruch 18 definiert, enthält.

**39.** Verfahren zur Herstellung eines Reifens für Fahrzeugräder gemäß mindestens einem der Ansprüche 32 bis 38, bei dem die Elastomerzusammensetzung ferner mindestens einen Rußfüllstoff (c), wie gemäß mindestens einem der Ansprüche 20 bis 22 definiert, enthält.

**40.** Verfahren zur Herstellung eines Reifens für Fahrzeugräder gemäß mindestens einem der Ansprüche 32 bis 39, bei dem die Elastomerzusammensetzung ferner mindestens einen Haftvermittler (d), wie gemäß mindestens einem der Ansprüche 24 bis 26 definiert, enthält.

**41.** Verfahren zur Herstellung eines Reifens für Fahrzeugräder gemäß mindestens einem der Ansprüche 32 bis 40, bei dem mindestens ein zusätzlicher Verstärkungsfüllstoff in einer Menge von 0,1 bis 120 phr in der Elastomerzusammensetzung vorliegt.

**42.** Verfahren zur Herstellung eines Reifens für Fahrzeugräder gemäß Anspruch 41, bei dem der Verstärkungsfüllstoff Silica ist.

**43.** Verfahren zur Herstellung eines Reifens für Fahrzeugräder gemäß Anspruch 42, bei dem mindestens ein Silanhaftvermittler (d) vorliegt.

**Revendications**

**1.** Pneumatique pour roue de véhicule, comprenant :

- une structure de carcasse (2) comportant au moins une nappe (3) de carcasse de forme sensiblement toroïdale, dont les bords latéraux (3a) opposés sont associés chacun, respectivement, à une tringle (4) de talon droit ou de talon gauche, chaque tringle étant noyée dans le talon (5) correspondant ;
- une structure de ceinture (6) comprenant au moins une bande (7a, 7b) de ceinture, disposée sur le pourtour externe de ladite structure de carcasse (2) ;
- une bande de roulement (10) disposée par-dessus le pourtour de ladite structure de ceinture (6), comprenant une couche radialement externe (12), conçue pour entrer en contact avec le sol, et une couche radialement interne (11), placée entre ladite couche radialement externe et ladite structure de ceinture (6) ;
- et une paire de flancs (9) disposés latéralement sur les côtés opposés de ladite structure de carcasse (2),

**caractérisé en ce que** ladite couche radialement interne (11) contient une composition élastomère réticulée qui comprend :

a) au moins un élastomère polymère de diène,
b) et au moins un matériau inorganique feuilleté dont les feuillets individuels sont épais de 0,01 à 30 nm.

**2.** Pneumatique pour roue de véhicule, conforme à la revendication 1, dans lequel les feuillets individuels du matériau inorganique feuilleté (b) sont épais de 0,05 à 15 nm.

**3.** Pneumatique pour roue de véhicule, conforme à la revendication 1 ou 2, dans lequel la couche radialement interne (11) est formée d'une composition élastomère réticulée dont le module élastique dynamique E' vaut, à 23 °C, de 10 à 30 MPa.

**4.** Pneumatique pour roue de véhicule, conforme à la revendication 3, dans lequel la couche radialement interne (11) est formée d'une composition élastomère réticulée dont le module élastique dynamique E' vaut, à 23 °C, de 15 à 20 MPa.

**5.** Pneumatique pour roue de véhicule, conforme à l'une des revendications précédentes, dans lequel l'épaisseur de la couche radialement interne (11) représente au moins 10 % de l'épaisseur totale de la bande de roulement.

**6.** Pneumatique pour roue de véhicule, conforme à la revendication 5, dans lequel l'épaisseur de la couche radialement interne (11) représente de 20 à 70 % de l'épaisseur totale de la bande de roulement.

**7.** Pneumatique pour roue de véhicule, conforme à l'une des revendications précédentes, dans lequel le matériau inorganique feuilleté (b) se trouve dans la composition élastomère en une proportion de 1 à 120 pcé (parties pour cent parties d'élastomère).

**8.** Pneumatique pour roue de véhicule, conforme à la revendication 7, dans lequel le matériau inorganique feuilleté (b) se trouve dans la composition élastomère en une proportion de 5 à 80 pcé.

**9.** Pneumatique pour roue de véhicule, conforme à l'une des revendications précédentes, pour lequel le matériau inorganique feuilleté (b) est choisi parmi des phyllosilicates tels que les smectites, par exemple les montmorillonite, nontronite, beidellite, volkonskoïte, hectorite, saponite et sauconite, la vermiculite, l'halloysite, la séricite et leurs mélanges.

**10.** Pneumatique pour roue de véhicule, conforme à la revendication 9, dans lequel le matériau inorganique feuilleté (b) est de la montmorillonite.

**11.** Pneumatique pour roue de véhicule, conforme à la revendication 9 ou 10, pour lequel le matériau inorganique feuilleté (b) a été traité en surface avec un agent de compatibilisation.

**12.** Pneumatique pour roue de véhicule, conforme à la revendication 11, pour lequel l'agent de compatibilisation est choisi parmi les sels d'ammonium ou de phosphonium quaternaire de formule générale (I) :

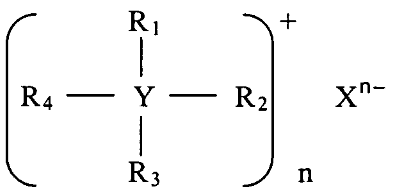

(I)

dans laquelle

- $R_1$, $R_2$, $R_3$ et $R_4$ représentent des entités identiques ou différentes, et représentent chacun :
un groupe alkyle ou hydroxyalkyle en $C_{1-20}$, à chaîne linéaire ou ramifiée,
un groupe alcényle ou hydroxyalcényle en $C_{1-20}$, à chaîne linéaire ou ramifiée,
un groupe de formule $-R_5$-SH ou $-R_5-NH_2$ où $R_5$ représente un groupe alcanediyle en $C_{1-20}$ à chaine linéaire ou ramifiée,
un groupe aryle en $C_{6-18}$,
un groupe aryl-alkyle ou alkyl-aryle en $C_{7-20}$,
ou un groupe cycloalkyle en $C_{5-18}$, lequel groupe cycloalkyle peut comporter un hétéroatome, tel un atome d'oxygène, d'azote ou de soufre ;
- $X^{n-}$ représente un anion, comme un ion chlorure, sulfate ou phosphate ;
- et l'indice n vaut 1, 2 ou 3.

**13.** Pneumatique pour roue de véhicule, conforme à l'une des revendications précédentes, dans lequel l'élastomère polymère de diène (a) présente une température de transition vitreuse inférieure à 20 °C.

**14.** Pneumatique pour roue de véhicule, conforme à la revendication 13, pour lequel l'élastomère polymère de diène (a) est choisi parmi les suivants : cis-1,4-polyisoprène, 3,4-polyisoprène, polybutadiène, copolymères d'isoprène et d'isobutène éventuellement halogénés, copolymères de buta-1,3-diène et d'acrylonitrile, copolymères de styrène et de buta-1,3-diène, copolymères de styrène, isoprène et buta-1,3-diène, et copolymères de styrène, buta-1,3-diène et acrylonitrile, ainsi que les mélanges de tels polymères.

**15.** Pneumatique pour roue de véhicule, conforme à l'une des revendications précédentes, dans lequel la composition élastomère comprend du caoutchouc naturel en une quantité représentant au moins 10 % du poids total de l'élastomère polymère de diène (a) au nombre d'au moins un.

**16.** Pneumatique pour roue de véhicule, conforme à la revendication 15, dans lequel la composition élastomère comprend du caoutchouc naturel en une quantité représentant de 20 à 90 % du poids total de l'élastomère polymère de diène (a) au nombre d'au moins un.

**17.** Pneumatique pour roue de véhicule, conforme à l'une des revendications précédentes, dans lequel la composition élastomère comprend en outre au moins un polymère élastomère (a') d'une ou plusieurs mono-oléfine(s) et d'un comonomère oléfinique, ou de dérivés de tels composés.

**18.** Pneumatique pour roue de véhicule, conforme à la revendication 17, pour lequel le polymère élastomère (a') est choisi parmi les suivants : copolymères d'éthylène et de propylène (EPR), copolymères d'éthylène, propylène et diène (EPDM), polyisobutène, caoutchoucs butyl et caoutchoucs butyl halogénés, ainsi que les mélanges de tels polymères.

**19.** Pneumatique pour roue de véhicule, conforme à l'une des revendications précédentes, dans lequel la composition élastomère comprend en outre au moins une charge (c) de type noir de carbone.

**20.** Pneumatique pour roue de véhicule, conforme à la revendication 19, dans lequel la charge (c) de type noir de

carbone présente une aire spécifique, déterminée par la méthode d'adsorption de CTAB (bromure de cétyl-triméthyl-ammonium) décrite dans la norme ISO 6810, d'au moins 20 $m^2$/g.

**21.** Pneumatique pour roue de véhicule, conforme à la revendication 19 ou 20, dans lequel la charge (c) de type noir de carbone se trouve dans la composition élastomère en une proportion de 0,1 à 120 pcé.

**22.** Pneumatique pour roue de véhicule, conforme à la revendication 21, dans lequel la charge (c) de type noir de carbone se trouve dans la composition élastomère en une proportion de 20 à 90 pcé.

**23.** Pneumatique pour roue de véhicule, conforme à l'une des revendications précédentes, dans lequel la composition élastomère comprend en outre au moins un agent de couplage (d) de type silane.

**24.** Pneumatique pour roue de véhicule, conforme à la revendication 23, pour lequel l'agent de couplage (d) de type silane est choisi parmi ceux qui comportent au moins un groupe silyle hydrolysable et qui peuvent être représentés par la formule générale suivante (II) :

$$(R)_3Si\text{-}C_nH_{2n}\text{-}X \qquad (II)$$

dans laquelle :

les entités symbolisées par R, qui peuvent être identiques ou différentes, sont choisies parmi les groupes alkyle, alcoxy et aryloxy et les atomes d'halogène, sous réserve qu'au moins l'une des entités symbolisées par R soit un groupe alcoxy ou aryloxy ;
l'indice n est un nombre entier valant de 1 à 6, bornes comprises ;
et X représente une entité choisie parmi les groupes nitroso, sulfanyle, amino et vinyle, les groupes de type époxyde ou imide, un atome de chlore, et les groupes de formule $-(S)_m-C_nH_{2n}-Si(R)_3$ dans laquelle les indices m et n sont des nombres entiers valant de 1 à 6, bornes comprises, et le symbole R a la signification indiquée ci-dessus.

**25.** Pneumatique pour roue de véhicule, conforme à la revendication 23 ou 24, dans lequel l'agent de couplage (d) de type silane se trouve dans la composition élastomère en une proportion de 0,01 à 10 pcé.

**26.** Pneumatique pour roue de véhicule, conforme à la revendication 25, dans lequel l'agent de couplage (d) de type silane se trouve dans la composition élastomère en une proportion de 0,5 à 5 pcé.

**27.** Pneumatique pour roue de véhicule, conforme à l'une des revendications précédentes, dans lequel il y a, dans la composition élastomère, au moins une charge renforçante supplémentaire qui s'y trouve en une proportion de 0,1 à 120 pcé.

**28.** Pneumatique pour roue de véhicule, conforme à la revendication 27, dans lequel la charge renforçante est une silice.

**29.** Pneumatique pour roue de véhicule, conforme à la revendication 28, dans lequel il y a au moins un agent de couplage (d) de type silane.

**30.** Pneumatique pour roue de véhicule, conforme à l'une des revendications précédentes, dans lequel la couche radialement externe de la bande de roulement est formée d'une composition élastomère réticulée dont le module élastique dynamique vaut, à 0 °C, de 5 à 15 MPa.

**31.** Pneumatique pour roue de véhicule, conforme à la revendication 30, dans lequel la couche radialement externe de la bande de roulement est formée d'une composition élastomère réticulée dont le module élastique dynamique vaut, à 0 °C, de 8 à 10 MPa.

**32.** Procédé de fabrication d'un pneumatique pour roue de véhicule, lequel procédé comporte les étapes suivantes :

- fabriquer un pneu cru en assemblant au moins une nappe de carcasse, une structure de ceinture disposée sur le pourtour externe de ladite nappe de carcasse, une bande de roulement disposée par-dessus le pourtour de ladite structure de ceinture, laquelle bande de roulement comprend une couche radialement externe, conçue pour entrer en contact avec le sol, et une couche radialement interne (11), placée entre ladite couche radialement

externe et ladite structure de ceinture ;
- soumettre ce pneu cru à une opération de moulage réalisée dans une cavité de moule formée dans un moule de vulcanisation ;
- et soumettre ledit pneu cru à une réticulation par chauffage ;

**caractérisé en ce que** ladite couche radialement interne (11) contient une composition élastomère réticulable qui comprend :

a) au moins un élastomère polymère de diène,
b) et au moins un matériau inorganique feuilleté dont les feuillets individuels sont épais de 0,01 à 30 nm.

**33.** Procédé de fabrication d'un pneumatique pour roue de véhicule, conforme à la revendication 32, dans lequel les feuillets individuels du matériau inorganique feuilleté sont épais de 0,05 à 15 nm.

**34.** Procédé de fabrication d'un pneumatique pour roue de véhicule, conforme à la revendication 32, dans lequel on obtient la couche radialement interne en enroulant, en spires disposées côte à côte, au moins une bande en forme de ruban, constituée d'une composition élastomère réticulable qui comprend :

a) au moins un élastomère polymère de diène,
b) et au moins un matériau inorganique feuilleté dont les feuillets individuels sont épais de 0,01 à 30 nm.

**35.** Procédé de fabrication d'un pneumatique pour roue de véhicule, conforme à la revendication 34, dans lequel les feuillets individuels du matériau inorganique feuilleté sont épais de 0,05 à 15 nm.

**36.** Procédé de fabrication d'un pneumatique pour roue de véhicule, conforme à l'une des revendications 32 à 35, dans lequel le matériau inorganique feuilleté (b) est tel que défini dans l'une des revendications 7 à 12.

**37.** Procédé de fabrication d'un pneumatique pour roue de véhicule, conforme à l'une des revendications 32 à 36, dans lequel l'élastomère polymère de diène (a) est tel que défini dans l'une des revendications 13 à 16.

**38.** Procédé de fabrication d'un pneumatique pour roue de véhicule, conforme à l'une des revendications 32 à 37, dans lequel la composition élastomère comprend en outre au moins un polymère élastomère (a') d'une ou plusieurs mono-oléfine(s) et d'un comonomère oléfinique, ou de dérivés de tels composés, tel que défini dans la revendication 18.

**39.** Procédé de fabrication d'un pneumatique pour roue de véhicule, conforme à l'une des revendications 32 à 38, dans lequel la composition élastomère comprend en outre au moins une charge (c) de type noir de carbone, telle que définie dans l'une des revendications 20 à 22.

**40.** Procédé de fabrication d'un pneumatique pour roue de véhicule, conforme à l'une des revendications 32 à 39, dans lequel la composition élastomère comprend en outre au moins un agent de couplage (d) de type silane, tel que défini dans l'une des revendications 24 à 26.

**41.** Procédé de fabrication d'un pneumatique pour roue de véhicule, conforme à l'une des revendications 32 à 40, dans lequel il y a, dans la composition élastomère, au moins une charge renforçante supplémentaire qui s'y trouve en une proportion de 0,1 à 120 pcé.

**42.** Procédé de fabrication d'un pneumatique pour roue de véhicule, conforme à la revendication 41, dans lequel la charge renforçante est une silice.

**43.** Procédé de fabrication d'un pneumatique pour roue de véhicule, conforme à la revendication 42, dans lequel il y a au moins un agent de couplage (d) de type silane.

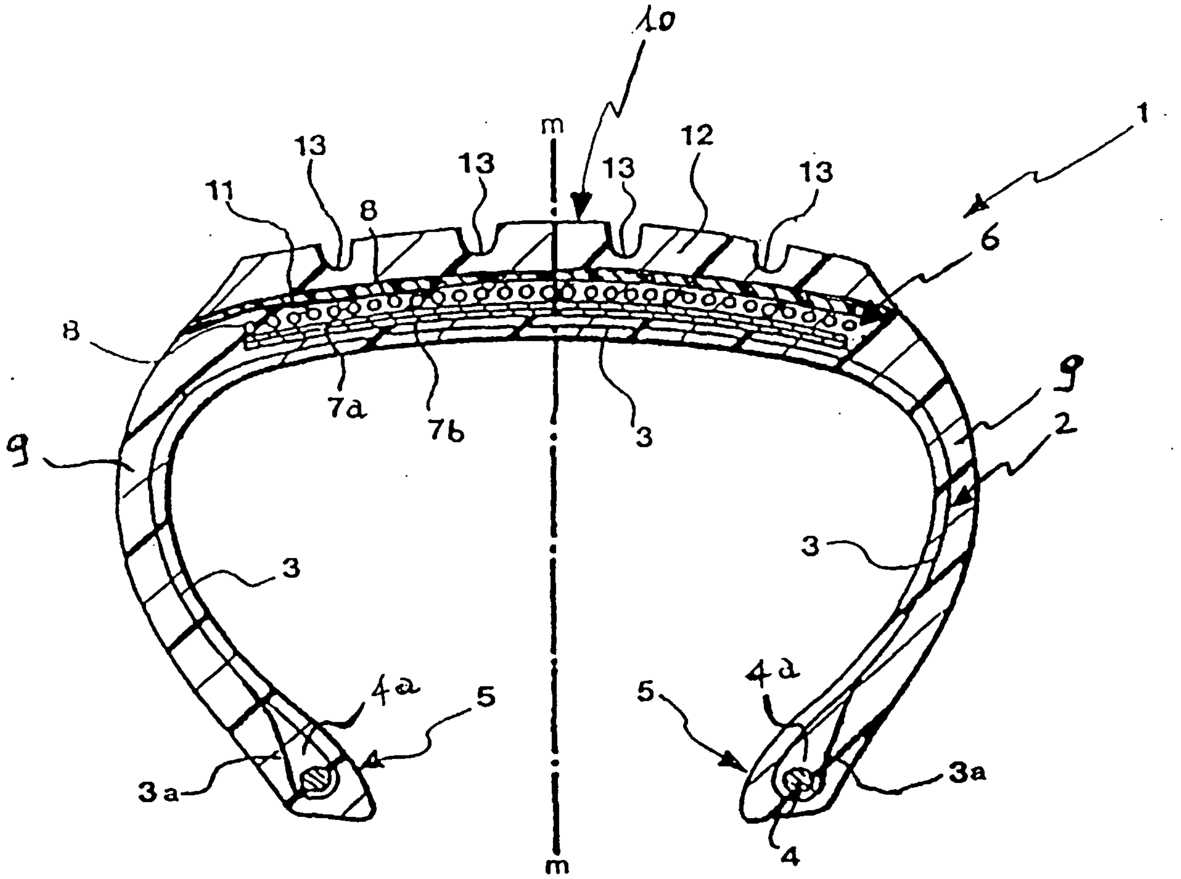


FIG. 1

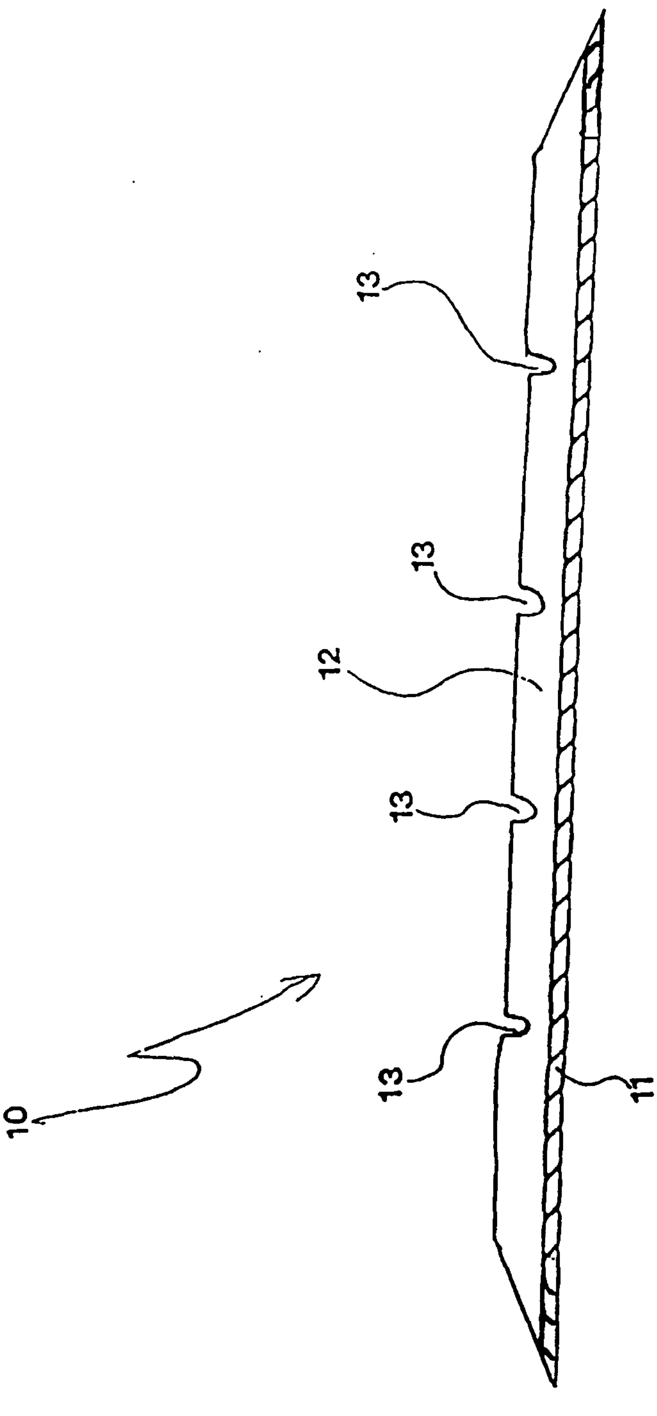


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4635693 A
- US 6516847 B
- US 20030015271 A
- EP 1270656 A
- WO 0136185 A
- EP 976536 A
- US 4136103 A
- US 5747560 A
- US 5952093 A
- EP 451604 A
- US 4742124 A
- US 4550142 A
- EP 928680 A
- EP 928702 A
- EP 199064 A
- US 4872822 A
- US 4768937 A
- EP 242840 A